# EUROPEAN PATENT APPLICATION

(11) **EP 4 664 655 A1**
(43) Date of publication of application: **17.12.2025**
(21) Application number: 25173235.0
(22) Date of filing: 29.04.2025
(51) Int. Cl.: H01M 50/474, H01M 50/477, H01M 50/103, H01M 50/15, H01M 50/531, H01M 50/593, H01M 50/609

(54) **SECONDARY BATTERY AND METHOD OF MANUFACTURING SAME**

(30) Priority: 14.06.2024 JP 2024096600
(71) Applicant: Prime Planet Energy & Solutions, Inc., Chuo-ku, Tokyo 103-0022 (JP)
(72) Inventor: TADA, Naoya, Tokyo, 103-0022 (JP); IMANISHI, Hiroaki, Tokyo, 103-0022 (JP)
(74) Representative: Kuhnen & Wacker Patent- und Rechtsanwaltsbüro PartG mbB

(57) **Abstract**

A first spacer (610) is disposed between a first sealing plate and an electrode assembly. The first spacer (610) includes a first base portion (630), a first outer peripheral wall (640), and a first inner wall (650). The first base portion (630) is provided with a plurality of through holes (632). The first outer peripheral wall (640) extends from an outer peripheral edge of a surface of the first base portion (630) on the first sealing plate (120) side toward the first sealing plate (120), and has a first portion (643) and a second portion (644) facing each other. The first inner wall (650) is provided to connect the first portion (643) and the second portion (644) of the first outer peripheral wall (640).

## Description

### CROSS REFERENCE TO RELATED APPLICATIONS

This nonprovisional application is based on Japanese Patent Application No. 2024-096600 filed on June 14, 2024 with the Japan Patent Office, the entire contents of which are hereby incorporated by reference.

### BACKGROUND OF THE INVENTION

### Field of the Invention

The present technology relates to a secondary battery and a method of manufacturing the secondary battery.

### Description of the Background Art

U.S. Patent Publication No. 2016/0099444 is a prior art document that discloses a configuration of a rechargeable battery. The specification of U.S. Patent Publication No. 2016/0099444 discloses that an insulating plate (20) is disposed between an electrode assembly (10) and a sealing plate (40).

### SUMMARY OF THE INVENTION

In order to improve reliability of a secondary battery, it has been required to readily introduce an electrolyte solution into an electrode assembly while maintaining strength of a spacer disposed between the electrode assembly and a case.

The present technology has been made to solve the above problem, and has an object to provide: a secondary battery in which an electrolyte solution can be readily introduced into an electrode assembly while maintaining strength of a spacer; and a method of manufacturing the secondary battery.

The present technology provides the following secondary battery.
[1] A secondary battery comprising:
   an electrode assembly including a first electrode and a second electrode having a polarity different from a polarity of the first electrode; and
   a case that accommodates the electrode assembly, wherein
   the case includes
      a case main body provided with a first opening at one end portion of the case main body and a second opening at the other end portion of the case main body,
      a first sealing plate that seals the first opening, and
      a second sealing plate that seals the second opening,
   the electrode assembly includes
      a first electrode tab disposed on the first sealing plate side and electrically connected to the first electrode, and
      a second electrode tab disposed on the second sealing plate side and electrically connected to the second electrode,
   a first spacer is disposed between the first sealing plate and the electrode assembly, and
   the first spacer includes
      a first base portion provided with a plurality of through holes,
      a first outer peripheral wall extending from an outer peripheral edge of a surface of the first base portion on the first sealing plate side toward the first sealing plate and having a first portion and a second portion facing each other, and
      a first inner wall provided to connect the first portion and the second portion of the first outer peripheral wall.
[2] The secondary battery according to [1], wherein
   the first outer peripheral wall further has a third portion and a fourth portion provided to intersect the first portion and the second portion and facing each other,
   the first spacer further includes a second inner wall provided to connect the third portion and the fourth portion of the first outer peripheral wall, and
   the first inner wall and the second inner wall are provided to intersect each other.
[3] The secondary battery according to [2], wherein
   the first base portion has a plurality of partition portions partitioned by the first outer peripheral wall, the first inner wall, and the second inner wall, and
   the plurality of through holes are provided at least in the plurality of partition portions of the first base portion.
[4] The secondary battery according to any one of [1] to [3], wherein
   the first spacer includes
      a second base portion disposed to be separated from the first base portion, and
      a second outer peripheral wall extending from an outer peripheral edge of a surface of the second base portion on the first sealing plate side toward the first sealing plate, and
   the first electrode tab is disposed between the first base portion and the second base portion.
[5] The secondary battery according to [4], wherein
   the second outer peripheral wall has a fifth portion and a sixth portion facing each other, and
   the first spacer includes a third inner wall provided to connect the fifth portion and the sixth portion of the second outer peripheral wall.
[6] The secondary battery according to [5], wherein the second base portion is provided with a through hole.
[7] The secondary battery according to any one of [4] to [6], wherein the first spacer includes a coupling portion that connects the first base portion and the second base portion.
[8] The secondary battery according to [7], wherein
   the first electrode tab has a curved portion, and
   the coupling portion has a curved surface facing the curved portion.
[9] The secondary battery according to any one of [1] to [8], wherein a second spacer is disposed between the second sealing plate and the electrode assembly.
   The present technology provides the following method of manufacturing the secondary battery.
[10] A method of manufacturing a secondary battery, wherein
   the secondary battery includes
      an electrode assembly including a first electrode and a second electrode having a polarity different from a polarity of the first electrode, and
      a case that accommodates the electrode assembly,
   the case includes
      a case main body provided with a first opening at one end portion of the case main body and a second opening at the other end portion of the case main body,
      a first sealing plate that seals the first opening, and
      a second sealing plate that seals the second opening,
   the electrode assembly includes
      a first electrode tab disposed on the first sealing plate side and electrically connected to the first electrode, and
      a second electrode tab disposed on the second sealing plate side and electrically connected to the second electrode,
   a first spacer is disposed between the first sealing plate and the electrode assembly, and
   the first spacer includes
      a first base portion provided with a plurality of through holes,
      a first outer peripheral wall extending from an outer peripheral edge of a surface of the first base portion on the first sealing plate side toward the first sealing plate and having a first portion and a second portion facing each other, and
      a first inner wall provided to connect the first portion and the second portion of the first outer peripheral wall,
   the method comprising:
      producing the electrode assembly;
      assembling the first spacer to the electrode assembly; and
      inserting the first spacer and the electrode assembly into the case main body.
[11] The method of manufacturing the secondary battery according to [10], comprising:
   joining the first sealing plate and the second sealing plate to the case main body after inserting the first spacer and the electrode assembly into the case main body; and
   after joining the first sealing plate and the second sealing plate to the case main body, injecting an electrolyte solution into the case via an injection hole in a state in which the second sealing plate is disposed on an upper side with respect to the first sealing plate and the first spacer is disposed on a lower side with respect to the electrode assembly in a vertical direction, the injection hole being provided in the second sealing plate.
[12] The method of manufacturing the secondary battery according to [10] or [11], wherein
   the first outer peripheral wall further has a third portion and a fourth portion provided to intersect the first portion and the second portion and facing each other,
   the first spacer further includes a second inner wall provided to connect the third portion and the fourth portion of the first outer peripheral wall, and
   the first inner wall and the second inner wall are provided to intersect each other.
[13] The method of manufacturing the secondary battery according to any one of [10] to [12], wherein
   the first spacer includes
      a second base portion disposed to be separated from the first base portion, and
      a second outer peripheral wall extending from an outer peripheral edge of a surface of the second base portion on the first sealing plate side toward the first sealing plate, and
   the first electrode tab is disposed between the first base portion and the second base portion.
[14] The method of manufacturing the secondary battery according to [13], wherein
   the second outer peripheral wall has a fifth portion and a sixth portion facing each other, and
   the first spacer includes a third inner wall provided to connect the fifth portion and the sixth portion of the second outer peripheral wall.
[15] The method of manufacturing the secondary battery according to any one of [10] to [14], comprising covering the electrode assembly and the first spacer with an insulating sheet after assembling the first spacer to the electrode assembly.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to a first embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a cross sectional view of a negative electrode plate.
Fig. 8 is a front view showing the negative electrode plate.
Fig. 9 is a cross sectional view of a positive electrode plate.
Fig. 10 is a front view showing the positive electrode plate.
Fig. 11 is a cross sectional view of the secondary battery shown in Fig. 1 along XI-XI.
Fig. 12 is a cross sectional view of the secondary battery shown in Fig. 1 along XII-XII.
Fig. 13 is a first perspective view showing an implementation of the spacer.
Fig. 14 is a second perspective view showing the implementation of the spacer.
Fig. 15 is a flowchart showing a method of manufacturing the secondary battery according to the first embodiment.
Fig. 16 is a perspective view showing a state in which current collectors are joined to two electrode assemblies included in the secondary battery according to the first embodiment.
Fig. 17 is a cross sectional view of each of the electrode assemblies and the current collectors shown in Fig. 16 along XVII-XVII.
Fig. 18 is a perspective view showing a state of attaching a spacer to the electrode assembly.
Fig. 19 is a perspective view showing a state before the electrode assembly and the spacer are covered with an insulating sheet.
Fig. 20 is a perspective view showing a state after the electrode assembly and the spacer are covered with the insulating sheet.
Fig. 21 is a perspective view showing a state of attaching a sealing plate to the current collector on the positive electrode side.
Fig. 22 is a perspective view showing the configuration of the secondary battery.
Fig. 23 is a front view showing a configuration of a spacer according to a second embodiment.
Fig. 24 is a front view showing a configuration of a spacer according to a third embodiment.
Fig. 25 is a front view showing a configuration of a spacer according to a fourth embodiment.
Fig. 26 is a front view showing a configuration of a spacer according to a fifth embodiment.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

In the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

In the present specification, the terms "comprise", "include", and "have" are open-end terms. That is, when a certain configuration is included, a configuration other than the foregoing configuration may or may not be included.

In the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" is not limited to a lithium ion battery, and may include other secondary batteries such as a nickel-metal hydride battery and a sodium-ion battery. In the present specification, the term "electrode" may collectively represent a positive electrode and a negative electrode.

In the specification of the present application, the first direction (X direction) may be referred to as a "width direction" of each of the secondary battery, the electrode assembly, and the case main body, the second direction (Z direction) may be referred to as a "height direction" of the secondary battery or the case main body, and the third direction (Y direction) may be referred to as a "thickness direction" of the secondary battery or the case main body. It should be noted that in order to facilitate understanding of the present technology, the detailed shape of each configuration in the figures may be illustrated in a simplified manner.

### (First Embodiment)

### (Overall Configuration of Battery)

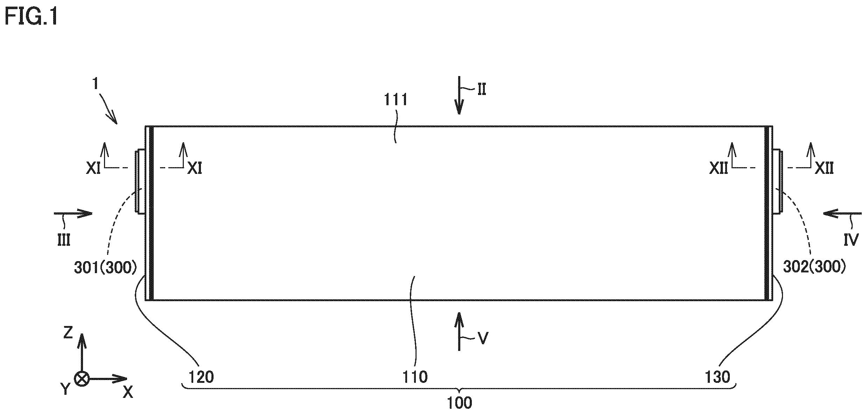

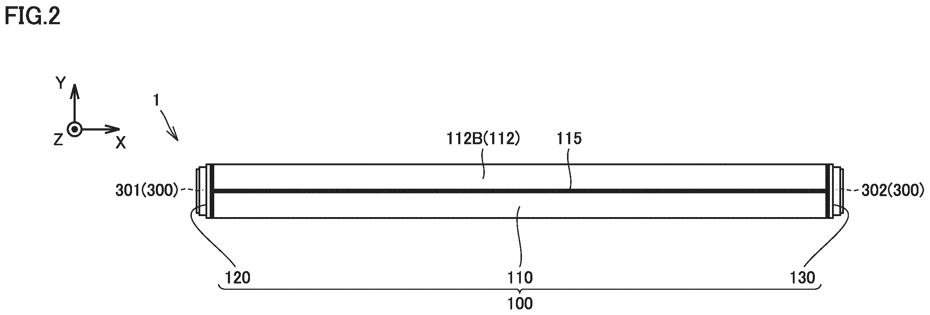

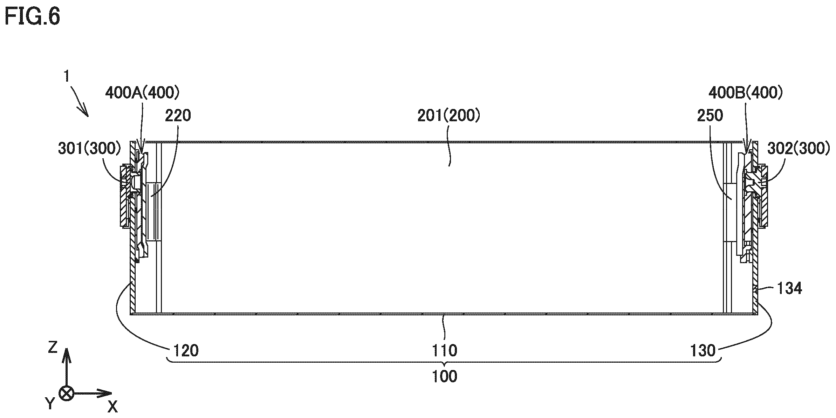

Fig. 1 is a front view of a secondary battery 1 according to a first embodiment. Figs. 2 to 5 are diagrams showing states of secondary battery 1 shown in Fig. 1 when viewed in directions of arrows II, III, IV, and V respectively. Fig. 6 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 6, secondary battery 1 includes a case 100, an electrode assembly 200, electrode terminals 300, and current collectors 400. Case 100 includes a case main body 110, a sealing plate 120 (first sealing plate), and a sealing plate 130 (second sealing plate).

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, sealing plate 120 and sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature. Moreover, the secondary battery in the present technology is not necessarily limited to the prismatic secondary battery.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

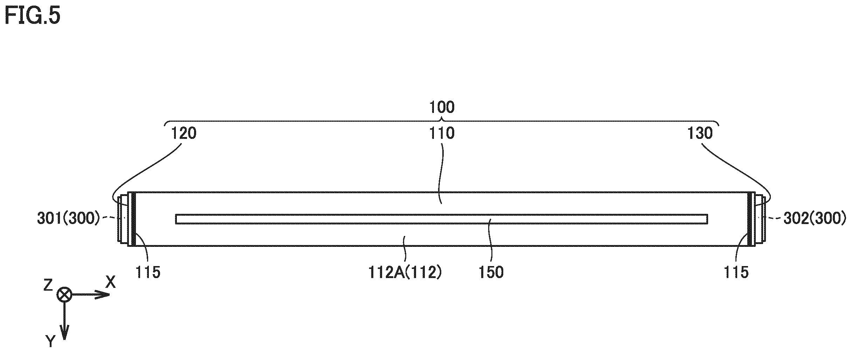

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. The shape of gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member constituting case main body 110 are joined to each other.

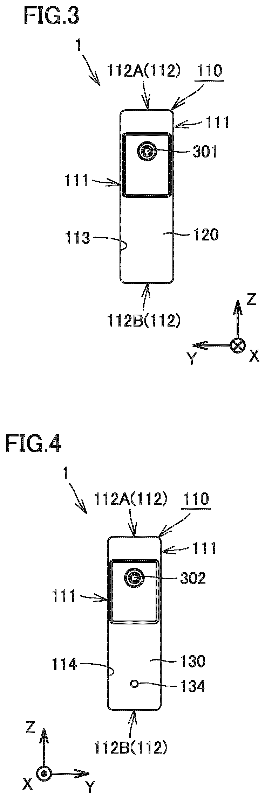

As shown in Fig. 3, an opening 113 (first opening) is provided at an end portion of case main body 110 on a first side in the first direction (X direction). Opening 113 is sealed by sealing plate 120. Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. The substantially rectangular shape includes a rectangular shape or a generally rectangular shape such as a rectangular shape having corners each with a curvature.

Sealing plate 120 (first sealing plate) is provided with a negative electrode terminal 301. The position of negative electrode terminal 301 can be appropriately changed.

As shown in Fig. 4, an opening 114 (second opening) is provided at an end portion of case main body 110 on a second side opposite to the first side in the first direction (X direction). That is, opening 114 is located at an end portion opposite to opening 113, and openings 113 and 114 face each other. Opening 114 is sealed by sealing plate 130. Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 (second sealing plate) is provided with a positive electrode terminal 302 and an injection hole 134. Injection hole 134 may have a size with which the electrolyte solution can be injected into case 100, and is desirably smaller than a hole used for insertion of positive electrode terminal 302 and provided in sealing plate 130. Injection hole 134 is desirably disposed to be deviated from the center of sealing plate 130 in the Z direction. The positions of positive electrode terminal 302 and injection hole 134 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 (first electrode terminal) is electrically connected to a negative electrode of electrode assembly 200. Negative electrode terminal 301 is attached to sealing plate 120, i.e., case 100.

Positive electrode terminal 302 (second electrode terminal) is electrically connected to a positive electrode of electrode assembly 200. Positive electrode terminal 302 is attached to sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 134 is sealed by a sealing member (not shown). As the sealing member, for example, a blind rivet or another metal member can be used.

Electrode assembly 200 is an electrode assembly having a flat shape and having a below-described positive electrode plate and a below-described negative electrode plate stacked on each other. Specifically, electrode assembly 200 is a stacked type electrode assembly in which a plurality of positive electrode plates and a plurality of negative electrode plates are alternately stacked with below-described separators 800 being interposed therebetween. However, in the present specification, the "electrode assembly" is not limited to the stacked type electrode assembly, and may be a wound type electrode assembly in which a strip-shaped positive electrode plate and a strip-shaped negative electrode plate are wound together with a strip-shaped separator being interposed therebetween. The separator can be constituted of, for example, a microporous membrane composed of polyolefin. When the electrode assembly is the stacked type electrode assembly including the plurality of positive electrode plates and the plurality of negative electrode plates, positive electrode tabs provided on the positive electrode plates may be stacked to form a positive electrode tab group, and negative electrode tabs provided on the negative electrode plates may be stacked to form a negative electrode tab group.

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and an electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and dimethyl carbonate (DMC) at a volume ratio (25°C) of 30:30:40. Instead of the electrolyte solution, a solid electrolyte may be used.

Electrode assembly 200 includes first electrode assembly 201. First electrode assembly 201 includes a main body portion having a substantially rectangular shape, a negative electrode tab group 220, and a positive electrode tab group 250.

The main body portion is constituted of a below-described negative electrode plate 210 and a below-described positive electrode plate 240. Negative electrode tab group 220 is located at an end portion of first electrode assembly 201 on the first side with respect to the main body portion thereof in the first direction (X direction). The first side in the present embodiment is the sealing plate 120 side. Positive electrode tab group 250 is located at an end portion of first electrode assembly 201 on the second side with respect to the main body portion thereof in the first direction (X direction). The second side in the present embodiment is the sealing plate 130 side.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 301 and positive electrode terminal 302 through current collectors 400.

Negative electrode current collector 400A is disposed on sealing plate 120 with an insulating member composed of a resin being interposed therebetween. Negative electrode current collector 400A is electrically connected to negative electrode tab group 220 and negative electrode terminal 301. Negative electrode current collector 400A is composed of a conductive material (more specifically, a metal), and can be composed of copper, a copper alloy, or the like, for example. Details of negative electrode current collector 400A will be described later.

Positive electrode current collector 400B is disposed on sealing plate 130 with an insulating member composed of a resin being interposed therebetween. Positive electrode current collector 400B is electrically connected to positive electrode tab group 250 and positive electrode terminal 302. Positive electrode current collector 400B is composed of a conductive material (more specifically, a metal), and can be composed of aluminum, an aluminum alloy, or the like, for example. Positive electrode tab group 250 may be electrically connected to sealing plate 130 directly or via positive electrode current collector 400B. In this case, sealing plate 130 may serve as positive electrode terminal 302. Details of positive electrode current collector 400B will be described later.

### (Configuration of Electrode Assembly 200)

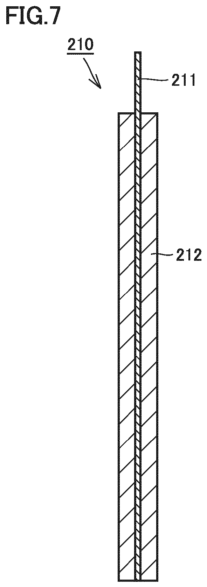

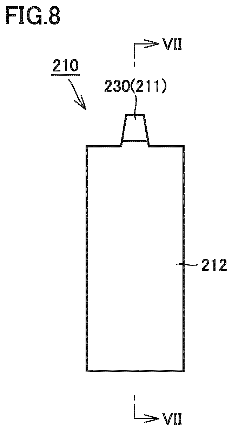

Fig. 7 is a cross sectional view of negative electrode plate 210 (cross sectional view along VII-VII in Fig. 8), and Fig. 8 is a front view showing negative electrode plate 210.

As shown in Figs. 7 and 8, positive electrode plate 210 serving as a first electrode has a polarity different from a polarity of negative electrode plate 240 serving as a second electrode. A negative electrode tab 230 (first electrode tab) constituted of a negative electrode core body 211 is provided at one end portion, in the width direction, of negative electrode plate 210. When negative electrode plates 210 are stacked, a plurality of negative electrode tabs 230 are stacked to form negative electrode tab group 220. Negative electrode tab group 220 is electrically connected to the first electrode. The length of each of the plurality of negative electrode tabs 230 in the plurality of negative electrode plates 210 in the protruding direction is appropriately adjusted in consideration of the state in which negative electrode tab group 220 is connected to negative electrode current collector 400A. The shape of negative electrode tab 230 is not limited to the one illustrated in Fig. 7.

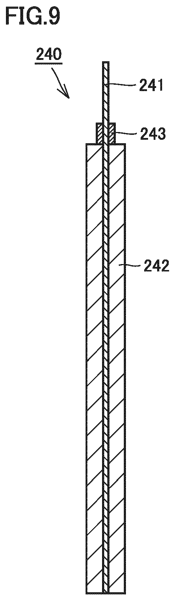

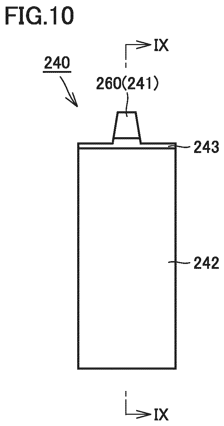

Fig. 9 is a cross sectional view of positive electrode plate 240 (cross sectional view along IX-IX in Fig. 10), and Fig. 10 is a front view showing positive electrode plate 240.

As shown in Figs. 9 and 10, a positive electrode tab 260 (second electrode tab) constituted of a positive electrode core body 241 is provided at one end portion, in the width direction, of positive electrode plate 240 formed. When positive electrode plates 240 are stacked, a plurality of positive electrode tabs 260 are stacked to form positive electrode tab group 250. Positive electrode tab group 250 is electrically connected to the second electrode. The length of each of positive electrode tabs 260 in the plurality of positive electrode plates 240 in the protruding direction is appropriately adjusted in consideration of the state in which positive electrode tab group 250 is connected to positive electrode current collector 400B. The shape of positive electrode tab 260 is not limited to the one illustrated in Fig. 10.

A positive electrode protective layer 243 is provided at the root of positive electrode tab 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

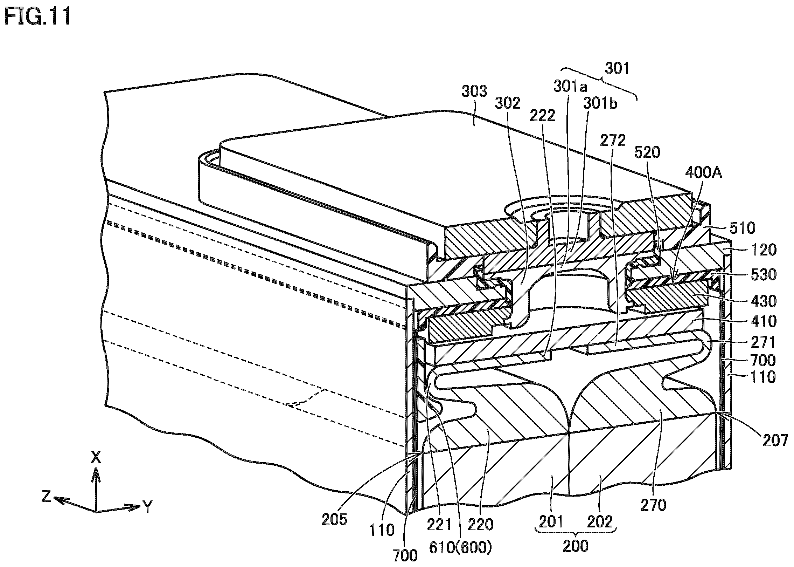

Fig. 11 is a cross sectional view of the secondary battery shown in Fig. 1 along XI-XI. As shown in Fig. 11, electrode assembly 200 includes first electrode assembly 201 and a second electrode assembly 202. Each of first electrode assembly 201 and second electrode assembly 202 includes a positive electrode (second electrode) and a negative electrode (first electrode). Electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

First electrode assembly 201 includes negative electrode tab group 220. Negative electrode tab group 220 is electrically connected to a current collector 410 (negative electrode current collector) at its first end portion 205 in the X direction. Second electrode assembly 202 includes a negative electrode tab group 270. Negative electrode tab group 270 is electrically connected to current collector 410 (negative electrode current collector) at its third end portion 207 in the X direction.

Negative electrode tab group 220 (first electrode tab) has a curved portion 221 and a tip portion 222. Curved portion 221 is a portion at which negative electrode tab group 220 is curved on the side, on which the first electrode is connected, with respect to tip portion 222. Tip portion 222 is a portion located at an end portion of negative electrode tab group 220 on the side opposite to the side on which the first electrode is connected.

Negative electrode tab group 270 (first electrode tab) has a curved portion 271 and a tip portion 272. Curved portion 271 is a portion at which negative electrode tab group 270 is curved on the side, on which the first electrode is connected, with respect to tip portion 272. Tip portion 272 is a portion located at an end portion of negative electrode tab group 270 on the side opposite to the side on which the first electrode is connected.

Negative electrode tab group 220 and negative electrode tab group 270 are curved in opposite directions such that tip portions 222, 272 are close to each other. Tip portions 222, 272 are separated from each other in the present embodiment; however, it is not limited to this configuration, and tip portions 222, 272 may be in contact with each other.

Negative electrode current collector 400A electrically connects negative electrode terminal 301 to negative electrode tab group 220 and negative electrode tab group 270. Negative electrode current collector 400A in the present embodiment is connected to negative electrode terminal 301 between electrode assembly 200 and sealing plate 120.

Negative electrode current collector 400A includes current collector 410 and a current collector 430.

Current collector 410 is a plate-shaped member. Current collector 410 has a long-side direction in the Z direction and a short-side direction in the Y direction. Current collector 410 is constituted of a single component in one piece. Current collector 430 is a plate-shaped member. Current collector 430 has a long-side direction in the Z direction and a short-side direction in the Y direction. Current collector 410 and current collector 430 are arranged side by side in parallel in the X direction. In this way, current collector 410 and current collector 430 are constituted of separate components.

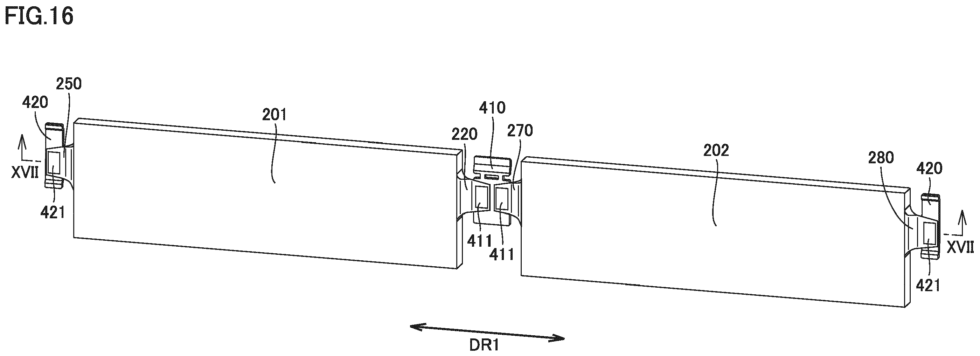

Negative electrode tab groups 220, 270 are joined to current collector 410 at joining locations 411 (see Fig. 16) described later. Each of joining locations 411 can be formed by ultrasonic welding, resistance welding, laser welding, swaging, or the like, for example. In the present embodiment, each of negative electrode tab groups 220, 270 and current collector 410 are joined by, for example, ultrasonic joining.

Current collector 430 is joined to current collector 410 at a joining location (not shown) located at its end portion in the Z direction. Current collector 430 is connected to negative electrode terminal 301. The connection between current collector 430 and negative electrode terminal 301 can be formed by swaging and/or welding, for example.

Negative electrode terminal 301 is exposed to the outside of sealing plate 120. Negative electrode terminal 301 is connected to a plate-shaped member 303. It should be noted that negative electrode terminal 301 preferably includes a region 301a composed of copper or a copper alloy and a region 301b composed of aluminum or an aluminum alloy, and region 301a composed of copper or a copper alloy is preferably connected to current collector 430.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

An insulating member 510 is disposed between plate-shaped member 303 and sealing plate 120. An insulating member 520 is disposed between negative electrode terminal 301 and sealing plate 120. An insulating member 530 is disposed between current collector 430 and sealing plate 120.

It should be noted that negative electrode terminal 301 may be electrically connected to sealing plate 120. Further, sealing plate 120 may function as negative electrode terminal 301.

A spacer 600 (first spacer 610) is disposed between sealing plate 120 (first sealing plate) and the main body portion (negative electrode tab groups 220, 270 are not included) of electrode assembly 200. First spacer 610 is composed of a resin member having an insulating property. First spacer 610 suppresses movement of electrode assembly 200 in case 100 in the X direction to suppress damages of negative electrode tab groups 220, 270, electrode assembly 200, and the like. Moreover, each of negative electrode tab group 220, 270 passes internal to first spacer 610 and is accordingly protected by first spacer 610.

Insulating sheet 700 (electrode assembly holder) composed of a resin is disposed between electrode assembly 200 and case main body 110. Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

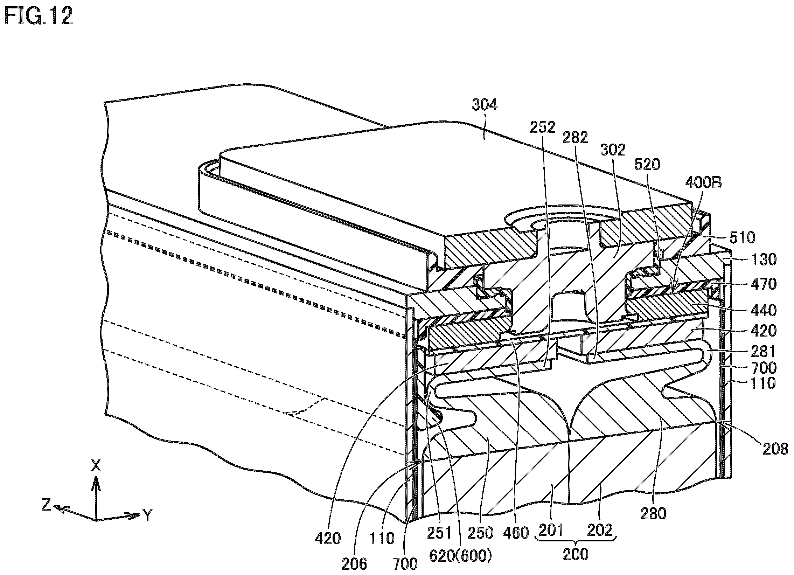

Fig. 12 is a cross sectional view of the secondary battery shown in Fig. 1 along XII-XII. The connection structure between electrode assembly 200 and current collector 400 on the positive electrode side of secondary battery 1 according to the present embodiment is different from that of the configuration on the negative electrode side in the following point: a portion corresponding to current collector 410 on the negative electrode side is constituted of two components.

First electrode assembly 201 includes positive electrode tab group 250. Positive electrode tab group 250 is electrically connected to current collector 420 (positive electrode current collector) at its second end portion 206 in the X direction. Second electrode assembly 202 includes a positive electrode tab group 280. Positive electrode tab group 280 is electrically connected to current collector 420 (positive electrode current collector) at its fourth end portion 208 in the X direction.

Positive electrode tab group 250 has a curved portion 251 and a tip portion 252. Curved portion 251 is a portion at which positive electrode tab group 250 is curved on the side, on which the second electrode is connected, with respect to tip portion 252. Tip portion 252 is a portion located at an end portion of positive electrode tab group 250 on the side opposite to the side on which the second electrode is connected.

Positive electrode tab group 280 has a curved portion 281 and a tip portion 282. Curved portion 281 is a portion at which positive electrode tab group 280 is curved on the side, on which the second electrode is connected, with respect to tip portion 282. Tip portion 282 is a portion located at an end portion of positive electrode tab group 280 on the side opposite to the side on which the second electrode is connected.

Positive electrode tab group 250 and positive electrode tab group 280 are curved in opposite directions such that tip portions 252, 282 are close to each other. Tip portions 252, 272 are separated from each other in the present embodiment; however, it is not limited to this configuration, and tip portions 252, 282 may be in contact with each other.

Positive electrode current collector 400B electrically connects positive electrode terminal 302 to positive electrode tab groups 250, 280. Positive electrode current collector 400B in the present embodiment is connected to positive electrode terminal 302 between electrode assembly 200 and sealing plate 130.

Positive electrode current collector 400B includes current collector 420 (first current collecting member) and a current collector 450 (second current collecting member). A plate 460 is interposed as an insulating member between current collector 420 (first current collecting member) and current collector 450 (second current collecting member), but current collector 420 and current collector 450 are electrically joined to each other at a position different from the cross section shown in the figure.

Current collector 420 is a plate-shaped member. Current collector 420 has a long-side direction in the Z direction and a short-side direction in the Y direction. Current collector 420 is constituted of one current collector and the other current collector. That is, current collector 420 is constituted of two components.

Positive electrode tab groups 250, 280 are joined, at below-described joining locations 421 (see Fig. 16), to current collector 420 constituted of the two components. Each of joining locations 421 can be formed by ultrasonic welding, resistance welding, laser welding, swaging, or the like, for example. In the present embodiment, positive electrode tab groups 250, 280 are joined to current collector 420 by ultrasonic joining, for example.

Current collector 440 is joined to current collector 420 at a joining location (not shown) located at its end portion in the Z direction. Current collector 440 is connected to positive electrode terminal 302. The connection between current collector 440 and positive electrode terminal 302 can be formed by swaging and/or welding, for example.

Positive electrode terminal 302 is provided to be exposed to the outside of sealing plate 130 and reach current collector 440 of positive electrode current collector 400B provided on the inner surface side of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 may be formed by, for example, laser welding or the like.

An insulating member 510 is disposed between plate-shaped member 304 and sealing plate 130. An insulating member 520 is disposed between positive electrode terminal 302 and sealing plate 130. An insulating member 470 is disposed between current collector 440 and sealing plate 130.

It should be noted that positive electrode terminal 302 may be electrically connected to sealing plate 130. Further, sealing plate 130 may function as positive electrode terminal 302.

A spacer 600 (second spacer 620) is disposed between sealing plate 130 (second sealing plate) and the main body portion (positive electrode tab groups 250, 280 are not included) of electrode assembly 200. Second spacer 620 is composed of a resin member having an insulating property. Second spacer 620 suppresses movement of electrode assembly 200 in case 100 in the X direction to suppress damages of positive electrode tab groups 250, 280, electrode assembly 200, and the like. Moreover, each of positive electrode tab groups 250, 280 passes internal to second spacer 620 and is accordingly protected by second spacer 620.

Spacer 600 is composed of a resin, for example. Examples of the material of spacer 600 includes polypropylene (PP), polyphenylene sulfide (PPS), polybutylene terephthalate (PBT), ethylene-propylene-diene rubber (EPDM), and the like.

Insulating sheet 700 (electrode assembly holder) composed of a resin as described above is disposed between electrode assembly 200 and case main body 110.

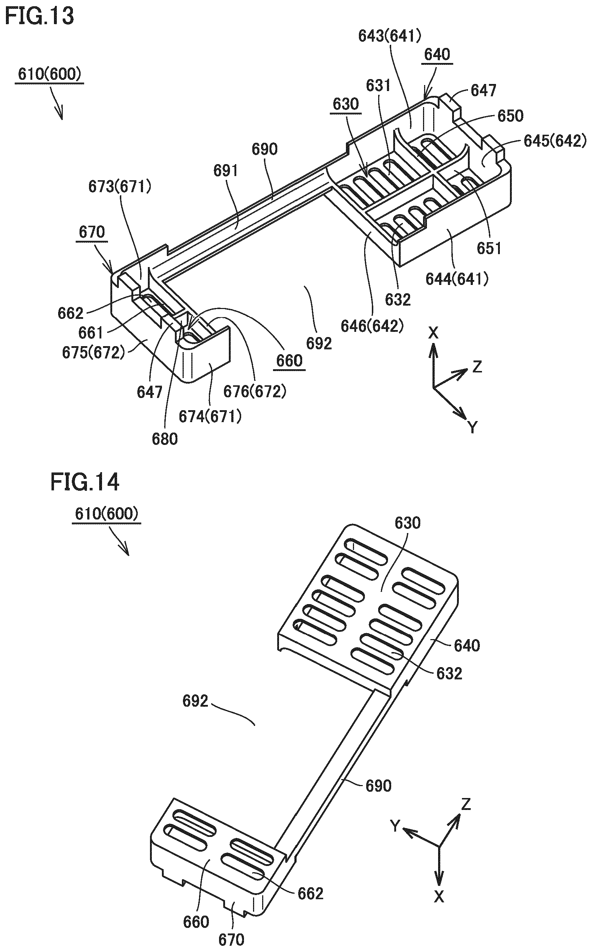

Fig. 13 is a first perspective view showing an implementation of the spacer. Fig. 14 is a second perspective view showing the implementation of the spacer. Spacer 600 shown in Figs. 13 and 14 is, for example, first spacer 610 disposed on the negative electrode side.

As shown in Figs. 13 and 14, first spacer 610 has a long-side direction and a short-side direction. The long-side direction is along the Z direction. The short-side direction is along the Y direction.

First spacer 610 includes a first base portion 630, a first outer peripheral wall 640, a first inner wall 650, a second inner wall 651, a second base portion 660, a second outer peripheral wall 670, a third inner wall 680, and a coupling portion 690.

First base portion 630 is a portion extending on one plane. First base portion 630 extends in the form of a substantially rectangular shape on the YZ plane. First base portion 630 extends to face electrode assembly 200 and sealing plate 120. It should be noted that first base portion 630 can be disposed in abutment with an end surface of electrode assembly 200.

First base portion 630 has a plurality of first partition portions 631. The plurality of first partition portions 631 are formed by partitioning first base portion 630 by first outer peripheral wall 640, first inner wall 650, and second inner wall 651. In the present embodiment, four first partition portions 631 are formed.

First base portion 630 is provided with a plurality of first through holes 632. The plurality of first through holes 632 extends through first base portion 630 in the X direction. Each of the plurality of first through holes 632 has an elongated hole shape.

The plurality of first through holes 632 are provided at least in the plurality of first partition portions 631 of first base portion 630. Preferably, at least one of the plurality of first through holes 632 is provided in each of the plurality of first partition portions 631. Moreover, a plurality of through holes are preferably provided in each of the plurality of first partition portions 631.

At least two of the plurality of first through holes 632 are provided in each of the plurality of first partition portions 631. In the present embodiment, for example, two or four of the plurality of first through holes 632 are provided in each of the plurality of first partition portions 631. The number of the plurality of first through holes 632 provided in each of the plurality of first partition portions 631 may not be the same among the plurality of first partition portions 631. It should be noted that the shape of each of the plurality of first through holes 632 and the number of the plurality of first through holes 632 are appropriately selected, and are not limited to the shape and the number shown in the figures.

When viewed in a direction perpendicular to first base portion 630, the total area of the plurality of first through holes 632 is such that a ratio of (the total area of the through holes formed in the first base portion)/(the area of a portion of the first base portion at which no outer peripheral wall and no inner wall are formed) is preferably 0.3 or more, is more preferably 0.5 or more, and is further preferably 0.6 or more.

First outer peripheral wall 640 extends from the outer peripheral edge of the surface of first base portion 630 on the sealing plate 120 (first sealing plate) side toward sealing plate 120 (first sealing plate). First outer peripheral wall 640 is disposed to surround the whole of the outer peripheral edge of first base portion 630. Therefore, first spacer 610 has an entire shape recessed to the electrode assembly 200 side. It should be noted that first outer peripheral wall 640 does not need to necessarily have a loop shape, and may be partially notched.

First outer peripheral wall 640 has a pair of first walls 641 and a pair of second walls 642. The pair of first walls 641 and the pair of second walls 642 are disposed to intersect each other.

Due to the pair of first walls 641 and the pair of second walls 642, first outer peripheral wall 640 has a substantially rectangular shape when viewed in the direction perpendicular to first base portion 630. The pair of first walls 641 and the pair of second walls 642 are connected together via other portions in first walls 641. Thus, the strength of first outer peripheral wall 640 can be facilitated to be maintained.

The pair of first walls 641 have one first wall 643 (first portion) and the other first wall 644 (second portion). One first wall 643 and the other first wall 644 face each other.

One first wall 643 extends in the long-side direction. One first wall 643 is continuous to coupling portion 690. The other first wall 644 faces one first wall 643 in the short-side direction and extends in the long-side direction.

The pair of second walls 642 have one second wall 645 (third portion) and the other second wall 646 (fourth portion). One second wall 645 and the other second wall 646 face each other.

One second wall 645 extends in the short-side direction. One second wall 645 is located at an end portion in the long-side direction. The other second wall 646 faces one second wall 645 in the long-side direction and extends in the short-side direction of first spacer 610. The other second wall 646 is continuous to coupling portion 690.

One second wall 645 and the other second wall 646 are provided to intersect one first wall 643 and the other first wall 644. In the present embodiment, one second wall 645 and the other second wall 646 are provided to be orthogonal to one first wall 643 and the other first wall 644. Each of one second wall 645 and the other second wall 646 connects end portions of one first wall 643 and the other first wall 644.

First outer peripheral wall 640 is provided with a plurality of protuberance portions 647. The plurality of protuberance portions 647 are provided on one second wall 645 of first outer peripheral wall 640. The plurality of protuberance portions 647 are arranged at intervals on one second wall 645. Since the plurality of protuberance portions 647 are provided, the injected electrolyte solution can be avoided from remaining in first spacer 610 and can be promoted to flow into the internal space of case 100. It should be noted that the plurality of protuberance portions 647 may not necessarily be provided in first spacer 610.

First inner wall 650 is provided to connect one first wall 643 and the other first wall 644. First inner wall 650 is formed to pass through an inner region of first base portion 630 away from the outer peripheral edge thereof.

First inner wall 650 extends from the surface of first base portion 630 on the sealing plate 120 (first sealing plate) side toward sealing plate 120 (first sealing plate). Since first inner wall 650 is continuous to first base portion 630, the strength can be more readily secured.

Second inner wall 651 is provided to connect one second wall 645 and the other second wall 646. Second inner wall 651 is formed to pass through an inner region of first base portion 630 away from the outer peripheral edge thereof.

Second inner wall 651 extends from the surface of first base portion 630 on the sealing plate 120 (first sealing plate) side toward sealing plate 120 (first sealing plate). Since second inner wall 651 is continuous to first base portion 630, the strength can be more readily secured.

First inner wall 650 and second inner wall 651 are provided to intersect each other. In the present embodiment, first inner wall 650 and second inner wall 651 are orthogonal to each other.

First inner wall 650 is disposed to be deviated from the center of one first wall 643 or the other first wall 644 in the long-side direction. Second inner wall 651 is disposed at substantially the center of one second wall 645 or the other second wall 646 in the short-side direction. It should be noted that both first inner wall 650 and second inner wall 651 may be provided to only connect either of the pair of first walls 641 and the pair of second walls 642.

Second base portion 660 is a portion extending on one plane. Second base portion 660 extends in the form of a substantially rectangular shape on the YZ plane. Second base portion 660 extends to face electrode assembly 200 and sealing plate 130. Second base portion 660 is disposed to be separated from first base portion 630. It should be noted that second base portion 660 can be disposed in abutment with the end surface of electrode assembly 200.

Second base portion 660 has a plurality of second partition portions 661. The plurality of second partition portions 661 are formed by partitioning second base portion 660 by third inner wall 680. In the present embodiment, two second partition portions 661 are formed.

Second base portion 660 is provided with through holes. Second base portion 660 in the present embodiment is provided with a plurality of second through holes 662. The plurality of second through holes 662 extend through second base portion 660 in the X direction. Each of the plurality of second through holes 662 has an elongated hole shape.

The plurality of second through holes 662 are provided at least in the plurality of second partition portions 661 of second base portion 660. Preferably, at least one of the plurality of second through holes 662 is provided in each of the plurality of second partition portions 661. Moreover, a plurality of through holes are preferably provided in each of the plurality of second partition portions 661.

For example, two of the plurality of second through holes 662 are provided in each of the plurality of second partition portions 661. The number of the plurality of second through holes 662 provided in each of the plurality of second partition portions 661 may not be the same among the plurality of second partition portions 661. It should be noted that the shape of each of the plurality of second through holes 662 and the number of the plurality of second through holes 662 are appropriately selected, and are not limited to the shape and the number shown in the figures.

When viewed in a direction perpendicular to second base portion 660, the total area of the plurality of second through holes 662 is such that a ratio of (the total area of the through holes formed in the second base portion)/(the area of a portion of the second base portion at which no outer peripheral wall and no inner wall are formed) is preferably 0.3 or more, is more preferably 0.5 or more, and is further preferably 0.6 or more.

Second outer peripheral wall 670 extends from the outer peripheral edge of the surface of second base portion 660 on the sealing plate 120 (first sealing plate) side toward sealing plate 120 (first sealing plate). Second outer peripheral wall 670 is disposed to surround the whole of the outer peripheral edge of second base portion 660. Therefore, first spacer 610 has an entire shape recessed to the electrode assembly 200 side.

Second outer peripheral wall 670 has a pair of third walls 671 and a pair of fourth walls 672. The pair of third walls 671 and the pair of fourth walls 672 are disposed to intersect each other.

Due to the pair of third walls 671 and the pair of fourth walls 672, second outer peripheral wall 670 has a substantially rectangular shape when viewed in the direction perpendicular to second base portion 660. The pair of third walls 671 and the pair of fourth walls 672 are connected together and are continuous to each other. Thus, the strength of second outer peripheral wall 670 can be facilitated to be maintained.

The pair of third walls 671 have one third wall 673 (fifth portion) and the other third wall 674 (sixth portion). One third wall 673 and the other third wall 674 face each other.

One third wall 673 extends in the long-side direction. One third wall 673 is continuous to coupling portion 690. The other third wall 674 faces one third wall 673 in the short-side direction and extends in the long-side direction.

The pair of fourth walls 672 have one fourth wall 675 and the other fourth wall 676. One fourth wall 675 and the other fourth wall 676 face each other.

One fourth wall 675 extends in the short-side direction. One fourth wall 675 is located at an end portion in the long-side direction. The other fourth wall 676 faces one fourth wall 675 in the long-side direction and extends in the short-side direction. The other fourth wall 676 is continuous to coupling portion 690.

One fourth wall 675 and the other fourth wall 676 are provided to intersect one third wall 673 and the other third wall 674. In the present embodiment, one fourth wall 675 and the other fourth wall 676 are provided to be orthogonal to one third wall 673 and the other third wall 674. Each of one fourth wall 675 and the other fourth wall 676 connects end portions of one third wall 673 and the other third wall 674.

Second outer peripheral wall 670 is provided with a plurality of protuberance portions 647. The plurality of protuberance portions 647 are provided at one fourth wall 675 of second outer peripheral wall 670. The plurality of protuberance portions 647 are arranged at intervals on one fourth wall 675.

Third inner wall 680 is provided to connect one fourth wall 675 and the other fourth wall 676.

Third inner wall 680 extends from the surface of second base portion 660 on the sealing plate 120 (first sealing plate) side toward sealing plate 120 (first sealing plate). Since third inner wall 680 is continuous to second base portion 660, the strength can be readily secured as compared with the case where third inner wall 680 is provided with a clearance being interposed between third inner wall 680 and second base portion 660.

Coupling portion 690 connects first base portion 630 and second base portion 660. Coupling portion 690 couples first outer peripheral wall 640 and second outer peripheral wall 670, thereby coupling first base portion 630 and second base portion 660. Coupling portion 690 is located on one side in the short-side direction.

Coupling portion 690 has a curved surface 691. Curved surface 691 has a shape recessed from the upper end side of the outer peripheral wall toward the base portion side.

Curved surface 691 faces curved portion 221 of negative electrode tab group 220. Thus, curved surface 691 is along curved portion 221.

A notch portion 692 is formed in first spacer 610. Notch portion 692 is surrounded by first base portion 630, second base portion 660, and coupling portion 690.

The electrode tab can be inserted via notch portion 692 into a portion internal to notch portion 692. Thus, negative electrode tab groups 220, 270 (first electrode tab) are disposed between first base portion 630 and second base portion 660.

When negative electrode tab groups 220, 270 are inserted via notch portion 692, curved portions 221 of the electrode tabs are along curved surface 691, thereby suppressing deformation of each of curved portions 221. Notch portion 692 is disposed at a position facing curved surface 691 in the short-side direction. Thus, when disposing negative electrode tab groups 220, 270 via notch portion 692 into the portion internal to notch portion 692, curved portion 221 is facilitated to be along curved surface 691.

Each of first base portion 630 and second base portion 660 described above is located on the end surface side of electrode assembly 200. Each of first base portion 630 and second base portion 660 may or may not be in abutment with the end surface of electrode assembly 200. When each of first base portion 630 and second base portion 660 is not in abutment with the end surface of electrode assembly 200, the shortest distance from each of first base portion 630 and second base portion 660 to electrode assembly 200 is preferably 2 mm or less, and is more preferably 1 mm or less. Moreover, the area of first base portion 630 is preferably larger than the area of second base portion 660.

The outer shape of first spacer 610 is a shape along the outer shape of electrode assembly 200 in the X direction. The outer size of spacer 600 is preferably smaller than the outer size of electrode assembly 200. Since insulating sheet 700 is wound around electrode assembly 200 and insulating sheet 700 is also wound around spacer 600, insertability of electrode assembly 200 into case main body 110 can be improved by making the outer size of spacer 600 smaller than that of electrode assembly 200.

The thickness of each of first base portion 630 and second base portion 660 in the X direction is preferably 0.1 mm or more, is more preferably 1 mm or more, and is further preferably 0.6 mm or more, for example. The thickness of each of first outer peripheral wall 640 and second outer peripheral wall 670 on the YZ plane is preferably 0.15 mm or more, is more preferably 2 mm or more, and is further preferably 0.6 mm or more. The height of each of first outer peripheral wall 640 and second outer peripheral wall 670 in the X direction is preferably 6 mm or more, is more preferably 15 mm or more, and is further preferably 12 mm or more.

Since first through hole 632 and second through hole 662 are provided in first spacer 610, when secondary battery 1 shown in Fig. 1 is placed with the Z direction corresponding to the upward direction (such a direction that opening 113 (first opening) and opening 114 (second opening) at the both ends of case main body 110 are arranged on the left and right), even if the electrolyte solution pushed out from the electrode assembly flows to outside of the through holes during charging (generally, the electrode plate is expanded), the electrolyte solution can be readily returned to inside of the electrode assembly during discharging (generally, the electrode plate is contracted).

Moreover, as with first spacer 610, second spacer 620 insulates electrode assembly 200 and case 100 from each other. Second spacer 620 preferably has a configuration mirror-symmetrical to first spacer 610 with electrode assembly 200 serving as the center.

The area of the first base portion of second spacer 620 is preferably larger than the area of the second base portion thereof. A portion of the first base portion or the second base portion of second spacer 620 at which no through hole is provided preferably faces injection hole 134 in the X direction. Thus, electrode assembly 200 can be suppressed from being damaged due to jet flow of the electrolyte solution when injecting the electrolyte solution.

### (Manufacturing Process for Secondary Battery 1)

Hereinafter, a method of manufacturing the secondary battery according to the present embodiment will be described.

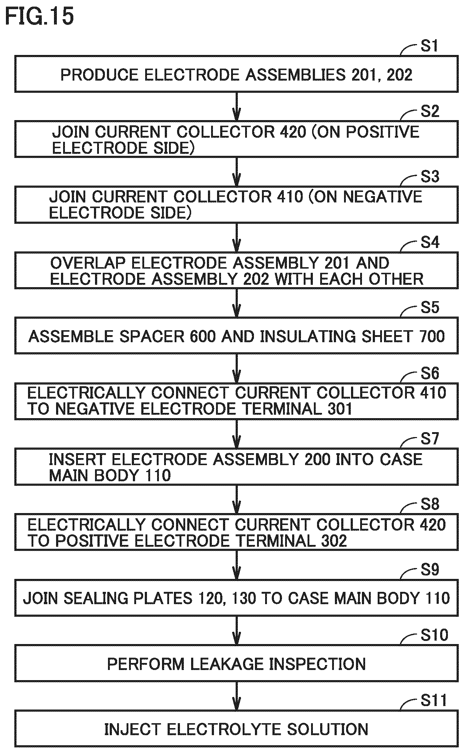

As shown in Fig. 15, in the method of manufacturing the secondary battery according to the present embodiment, first, first electrode assembly 201 and second electrode assembly 202 are produced (step S1). Parts of the tips of negative electrode tab group 220, positive electrode tab group 250, negative electrode tab group 270, and positive electrode tab group 280 are preferably cut such that they have the same tip length when bundled.

As shown in Figs. 15 to 17, after producing first electrode assembly 201 and second electrode assembly 202, each of positive electrode tab groups 250, 280 is joined to current collector 420 (step S2). Each of positive electrode tab group 250, 280 is joined to current collector 420 at joining location 421.

Next, first electrode assembly 201, current collector 410, and second electrode assembly 202 are disposed side by side in this order in a DR1 direction. Negative electrode tab group 220 is disposed on one side with respect to current collector 410 in the DR1 direction. Negative electrode tab group 220 and negative electrode tab group 270 are joined to current collector 410 with negative electrode tab group 270 being disposed on the other side with respect to current collector 410 in the DR1 direction (step S3). Negative electrode tab group 220 and negative electrode tab group 270 are joined to current collector 410 at joining locations 411.

In the height direction of each of first electrode assembly 201 and second electrode assembly 202, each of current collector 410 and current collector 420 is disposed on one side with respect to the center of each of first electrode assembly 201 and second electrode assembly 202. Thus, each of the current collectors can be formed to be short, thereby reducing the size of the current collector. Each of current collector 410 and current collector 420 is not limited to this configuration. In the height direction of each of first electrode assembly 201 and second electrode assembly 202, each of current collector 410 and current collector 420 may be disposed at the center of a corresponding one of first electrode assembly 201 and second electrode assembly 202.

The order of the steps of joining current collector 410 and current collector 420 to first electrode assembly 201 and second electrode assembly 202 is not limited to the one described above, and the order may be changed. The step of joining current collector 420 to each of first electrode assembly 201 and second electrode assembly 202 is preferably performed before the below-described step of overlapping first electrode assembly 201 and second electrode assembly 202 with each other, and is preferably performed before the step of joining current collector 410 to first electrode assembly 201 and second electrode assembly 202.

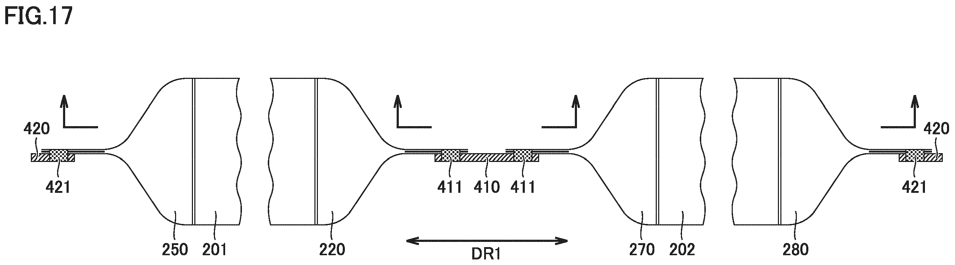

Next, after joining negative electrode tab group 220 and negative electrode tab group 270 to current collector 410, negative electrode tab group 220 and negative electrode tab group 270 are bent in the thickness direction (direction orthogonal to the DR1 direction in Figs. 16 and 17) of each of first electrode assembly 201 and second electrode assembly 202, thereby overlapping first electrode assembly 201 and second electrode assembly 202 with each other (step S4). That is, first electrode assembly 201 and second electrode assembly 202 are collected together.

Regarding the expression "overlapping the first electrode assembly and the second electrode assembly with each other", the first electrode assembly and the second electrode assembly may be overlapped with each other directly, or another member may be disposed between the first electrode assembly and the second electrode assembly. Further, the first electrode assembly and the second electrode assembly may or may not be fixed by a tape or the like. Further, the first electrode assembly, the current collector, and the second electrode assembly may not be disposed on a straight line in the DR1 direction, and the first electrode assembly or the second electrode assembly may be inclined with respect to the current collector in the DR1 direction.

Negative electrode tab group 220 and negative electrode tab group 270 are folded such that tip portions thereof face each other. Similarly, positive electrode tab group 250 and positive electrode tab group 280 are also folded such that tip portions thereof face each other.

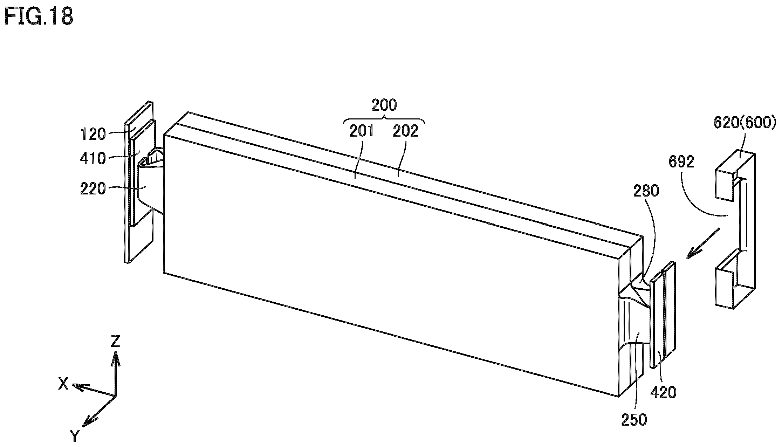

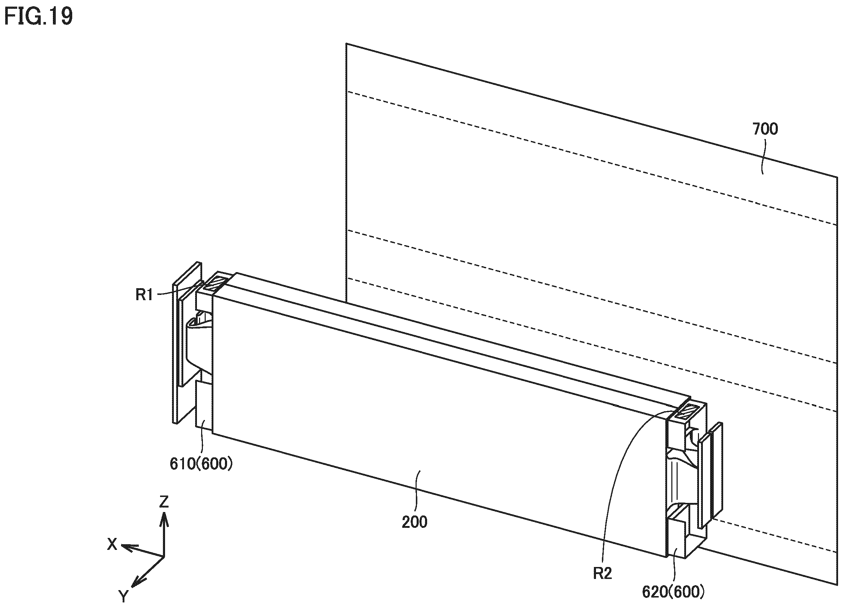

Fig. 18 is a perspective view showing a state of attaching the spacer to the electrode assembly. Fig. 19 is a perspective view showing a state before the electrode assembly and the spacer are covered with the insulating sheet.

As shown in Figs. 15, 18 and 19, spacer 600 and insulating sheet 700 are assembled to electrode assembly 200 (step S5).

Specifically, second spacer 620 is exemplified and second spacer 620 is assembled to electrode assembly 200 as shown in Fig. 18. Second spacer 620 is assembled to electrode assembly 200 in the Y direction (direction orthogonal to the X direction). Second spacer 620 is assembled to electrode assembly 200 such that positive electrode tab groups 250, 280 are accommodated in the portion internal to notch portion 692. Since the electrode tab can be inserted into second spacer 620 via the notch portion, spacer 600 can be readily assembled to electrode assembly 200 as compared with a case where a hole through which the electrode tab is to be inserted is provided in the spacer and the electrode tab is inserted into the hole.

First spacer 610 is also assembled to electrode assembly 200 by accommodating the negative electrode tab group via the notch portion into the portion internal to the notch portion.

As shown in Fig. 19, after first spacer 610 and second spacer 620 are assembled to electrode assembly 200, electrode assembly 200, first spacer 610, and second spacer 620 are covered with insulating sheet 700. Thus, electrode assembly 200, first spacer 610, and second spacer 620 are covered with insulating sheet 700 with first spacer 610 being disposed at one end of electrode assembly 200 and second spacer 620 being disposed at the other end of electrode assembly 200.

Since spacers 600 are also covered with insulating sheet 700, the negative electrode tab group and the positive electrode tab group located inside spacers 600 can be more firmly protected.

Insulating sheet 700 is fixed to spacers 600. Insulating sheet 700 is thermally welded to a first region R1 and a second region R2 of spacers 600, thereby fixing insulating sheet 700 to spacers 600.

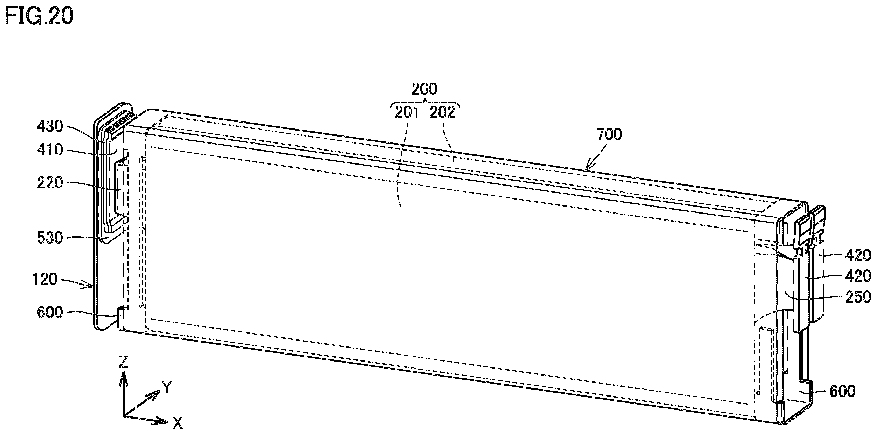

Fig. 20 is a perspective view showing a state after the electrode assembly and the spacer are covered with the insulating sheet. As shown in Fig. 20, the insulating sheet according to the present embodiment covers the entire periphery of each of the electrode assembly and the spacer in the axial direction in the X direction. It should be noted that insulating sheet 700 does not necessarily need to cover a whole of the surfaces of electrode assembly 200. Insulating sheet 700 preferably covers an area of about 50% or more, more preferably about 70% or more, of the outer surfaces of the electrode assembly. Insulating sheet 700 preferably covers a whole of at least four surfaces of the six surfaces of electrode assembly 200 having a substantially rectangular parallelepiped shape (flat shape) other than the two surfaces thereof on which negative electrode tab group 220 and positive electrode tab group 250 are formed respectively. Each of the plurality of protuberance portions 647 provided in spacer 600 is preferably exposed from insulating sheet 700.

As shown in Figs. 15 and 20, next, current collector 410 is electrically connected to negative electrode terminal 301 with current collector 430 being interposed therebetween (step S6). It should be noted that step S6 may be performed before step S5.

Specifically, negative electrode tab group 220 and negative electrode tab group 270 are folded such that tip portions 222, 272 face each other.

Each of negative electrode terminal 301 and current collector 430 is attached to sealing plate 120 with an insulating member being interposed therebetween. Current collector 430 is brought into abutment with current collector 410 in the X direction. It should be noted that the connecting of plate-shaped member 303 to negative electrode terminal 301 may be performed at any timing. Current collector 430 and current collector 410 are joined to each other by laser welding from between sealing plate 120 and insulating sheet 700.

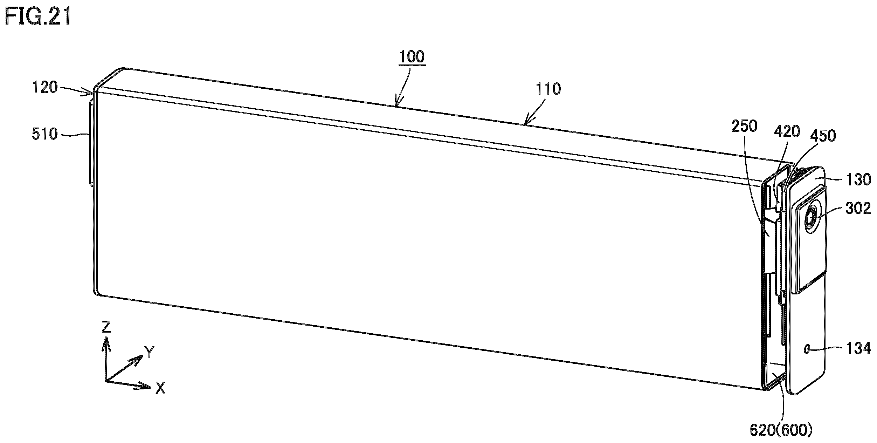

Fig. 21 is a perspective view showing a state of attaching a sealing plate to the current collector on the positive electrode side. As shown in Fig. 21, next, spacer 600 and electrode assembly 200 are inserted into case main body 110 via opening 113 with the current collector 420 side being inserted first (step S7).

Negative electrode tab group 220 and negative electrode tab group 270 are curved by bringing sealing plate 120 close to the main body portion of electrode assembly 200 (first electrode assembly 201 and second electrode assembly 202). As shown in Fig. 11, negative electrode tab group 220 and negative electrode tab group 270 are curved along the shape of spacer 600 such that the folded portions of curved portions 221, 271 are close to case main body 110 in the Y direction.

After bringing sealing plate 120 into abutment with case main body 110, sealing plate 120 is temporarily joined to case main body 110. By the temporary joining, sealing plate 120 is partially joined to opening 113 of case main body 110. Thus, sealing plate 120 is positioned with respect to case main body 110.

When inserting electrode assembly 200 into case main body 110, electrode assembly 200 may be pulled from the current collector 420 side, or may be pushed from the current collector 410 side. When electrode assembly 200 is pushed from the current collector 410 side, negative electrode tab group 220 and negative electrode tab group 270 can be curved at the same time.

After electrode assembly 200 is inserted into case main body 110, current collector 420 is electrically connected to positive electrode terminal 302 (step S8).

Specifically, positive electrode terminal 302 is attached to sealing plate 130 with an insulating member being interposed therebetween. After inserting first electrode assembly 201 and second electrode assembly 202 into case main body 110, current collector 450 is brought into abutment, in the X direction, with current collector 420 protruding from opening 114. The connecting of plate-shaped member 304 to positive electrode terminal 302 may be performed at any timing.

Positive electrode tab group 250 and positive electrode tab group 280 connected to current collector 420 are folded such that tip portions 252, 282 face each other. As shown in Fig. 12, positive electrode tab group 250 and positive electrode tab group 280 are curved along the shape of spacer 600 such that the folded portions of curved portions 251, 281 are close to case main body 110 in the Y direction.

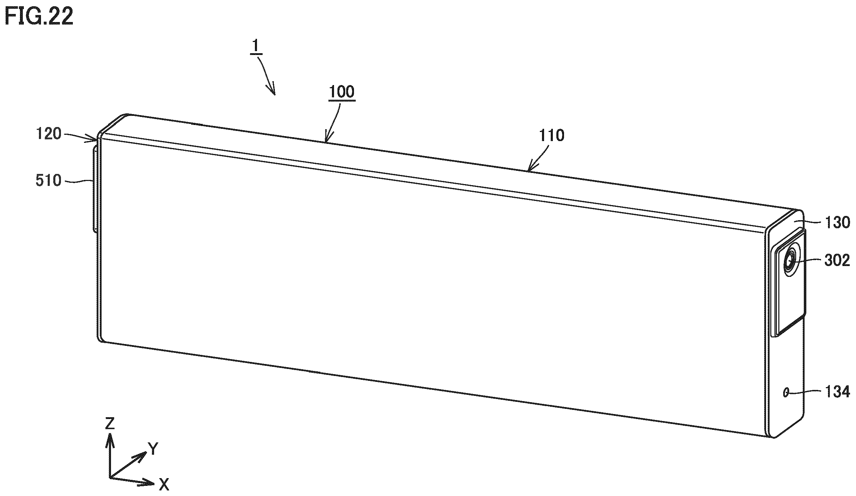

Fig. 22 is a perspective view showing the configuration of the secondary battery. As shown in Fig. 22, after first spacer 610 and electrode assembly 200 are inserted into case main body 110, sealing plate 130 (first sealing plate) and sealing plate 120 (second sealing plate) are joined to case main body 110 (step S9).

Specifically, after sealing plate 130 is brought into abutment with case main body 110, sealing plate 130 is temporarily welded to case main body 110. By the temporary joining, sealing plate 130 is partially joined to opening 114 of case main body 110. Thus, sealing plate 130 is positioned with respect to case main body 110.

Next, sealing plate 120 and sealing plate 130 are joined to case main body 110. Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S10). After the leakage inspection, secondary battery 1 is dried to remove moisture in case 100.

Next, the electrolyte solution is injected into case 100 via the injection hole provided in sealing plate 130 (second sealing plate) in a state in which sealing plate 130 (second sealing plate) is disposed on the upper side with respect to sealing plate 120 (first sealing plate) and first spacer 610 is disposed on the lower side with respect to electrode assembly 200 in the vertical direction (step S11). Since spacer 600 is provided around the portion via which the electrolyte solution is injected, electrode assembly 200 or the like is suppressed from being damaged even when the electrolyte solution is vigorously injected into case 100. Thus, in secondary battery 1 according to the present embodiment, the electrolyte solution can be injected in a shorter period of time than that in a case where spacer 600 is not provided.

During the injection, an angle of the main surface of the sealing plate with respect to the vertical direction is preferably about 90±45° with respect to the vertical direction. During the injection, the main surface of the sealing plate is more preferably perpendicular to the vertical direction.

The weight of electrode assembly 200 disposed in case 100 is preferably 500 g or more, and is more preferably 1 kg or more. The weight of electrode assembly 200 is a weight in a state in which no electrolyte solution is included therein. Moreover, when there are a plurality of electrode assemblies 200, the weight of electrode assembly 200 means the total weight of electrode assemblies 200. Even though electrode assembly 200 is heavy, electrode assembly 200 can be supported by first spacer 610.

Thereafter, charging is performed to result in release of gas. For performing the charging to result in release of gas, injection hole 134 may be temporarily sealed. Thereafter, injection hole 134 is sealed, thereby completing secondary battery 1.

In each of secondary battery 1 and the method of manufacturing the same according to the first embodiment of the present technology, since first inner wall 650 is provided in first spacer 610, first spacer 610 can be suppressed from being deformed as compared with a case where first inner wall 650 is not provided. Since the plurality of first through holes 632 are provided in first base portion 630, the electrolyte solution can be suppressed from remaining between sealing plate 120 and first spacer 610. Thus, the electrolyte solution can be readily introduced into electrode assembly 200 while maintaining the strength of spacer 600. Accordingly, a secondary battery having high reliability can be provided.

In each of secondary battery 1 and the method of manufacturing the same according to the first embodiment of the present technology, since first inner wall 650 and second inner wall 651 are provided to intersect each other, structural integration can be achieved as compared with a case where first inner wall 650 and second inner wall 651 are separately disposed without intersecting each other, thereby improving the strength of first spacer 610.

In secondary battery 1 according to the first embodiment of the present technology, since the plurality of first through holes 632 are provided at least in the plurality of first partition portions 631 of first base portion 630, the plurality of first through holes 632 can be provided in the plurality of first partition portions 631 in a distributed manner, thereby suppressing the electrolyte solution from remaining while securing the strength of spacer 600.

In each of secondary battery 1 and the method of manufacturing the same according to the first embodiment of the present technology, since the first electrode tab is disposed between first base portion 630 and second base portion 660 of first spacer 610, when force is applied from first spacer 610 to electrode assembly 200, the force applied from first spacer 610 to electrode assembly 200 can be distributed, thereby suppressing damage of the end portion of electrode assembly 200.

In each of secondary battery 1 and the method of manufacturing the same according to the first embodiment of the present technology, since third inner wall 680 provided to connect one third wall 673 (fifth portion) and the other third wall 674 (sixth portion) of second outer peripheral wall 670 is included, the strength of spacer 600 can be improved.

In secondary battery 1 according to the first embodiment of the present technology, since second through hole 662 is provided in second base portion 660, the electrolyte solution can be suppressed more from remaining in spacer 600.

In secondary battery 1 according to the first embodiment of the present technology, since coupling portion 690 that connects first base portion 630 and second base portion 660 is provided, first spacer 610 including first base portion 630 and second base portion 660 can have a configuration in one piece, with the result that first spacer 610 can be readily assembled to electrode assembly 200.

In secondary battery 1 according to the first embodiment of the present technology, since coupling portion 690 of first spacer 610 has curved surface 691 facing curved portion 221 of the electrode tab, curved portion 221 can be promoted to be formed. Moreover, since first spacer 610 is along curved portion 221, the electrode tab can be suppressed from being damaged due to contact between the electrode tab and spacer 600.

In secondary battery 1 according to the first embodiment of the present technology, since second spacer 620 is provided between sealing plate 130 (second sealing plate) and electrode assembly 200, electrode assembly 200 can be sandwiched by first spacer 610 and second spacer 620, thereby suppressing movement of electrode assembly 200 in case 100.

In the method of manufacturing secondary battery 1 according to the first embodiment of the present technology, since the deformation of first spacer 610 is suppressed by injecting the electrolyte solution into case 100 via injection hole 134 in the state in which first spacer 610 is disposed on the lower side with respect to electrode assembly 200, electrode assembly 200 can be stably supported. Thus, the electrode tab and electrode assembly 200 can be suppressed from being damaged. Moreover, since electrode assembly 200 can be stably supported, even when the speed of injecting the electrolyte solution becomes fast, electrode assembly 200 is not needlessly moved inside case 100 and the electrolyte solution can be therefore injected in a short period of time, thereby improving injection property for the electrolyte solution.

In the method of manufacturing secondary battery 1 according to the first embodiment of the present technology, since electrode assembly 200, first spacer 610, and the second spacer are covered with insulating sheet 700, insulating sheet 700, which is slippery, is located on the outer peripheral side, thereby facilitating the insertion of electrode assembly 200 and spacer 600 into case main body 110. Moreover, with insulating sheet 700, the electrode tab and electrode assembly 200 can be effectively suppressed from being damaged.

Hereinafter, secondary batteries according to second to fifth embodiments will be described. Since the secondary battery according to each of the second to fifth embodiments is different from secondary battery 1 according to the first embodiment of the present technology in terms of the configuration of the spacer, the same configurations as those of secondary battery 1 according to the first embodiment of the present technology will not be described repeatedly.

### (Second Embodiment)

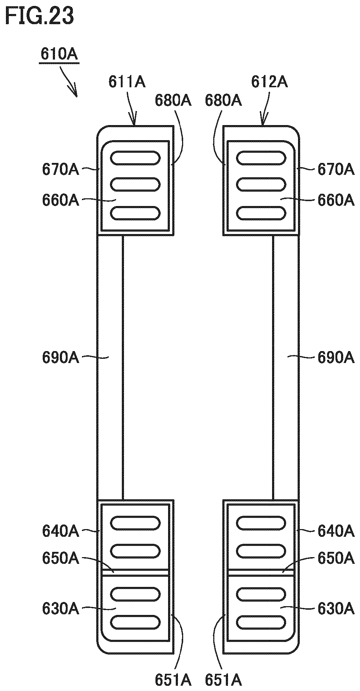

As shown in Fig. 23, a first spacer 610A according to the second embodiment is constituted of two members. First spacer 610A includes one first spacer 611A and the other first spacer 612A.

Each of one first spacer 611A and the other first spacer 612A includes a first base portion 630A, a first outer peripheral wall 640A, a first inner wall 650A, a second inner wall 651A, a second base portion 660A, a second outer peripheral wall 670A, a third inner wall 680A, and a coupling portion 690A. First spacer 610A is provided with two coupling portions 690A.

When assembling first spacer 610A to the electrode assembly, one first spacer 611A and the other first spacer 612A are integrated by connecting second inner walls 651A to each other and connecting third inner walls 680A to each other.

In the secondary battery according to the second embodiment of the present technology, the two electrode tabs formed in the electrode assembly can be respectively supported by two coupling portions 690A.

### (Third Embodiment)

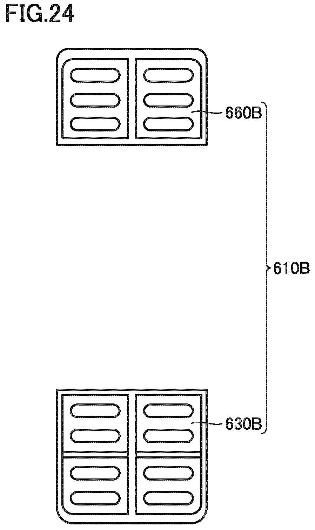

As shown in Fig. 24, a first spacer 610B according to the third embodiment includes a first base portion 630B and a second base portion 660B. First spacer 610B has no coupling portion.

In the secondary battery according to the third embodiment of the present technology, since no coupling portion is provided, the spacer can be readily disposed between the sealing plate and the electrode assembly regardless of the shape of the electrode tab.

### (Fourth Embodiment and Fifth Embodiment)

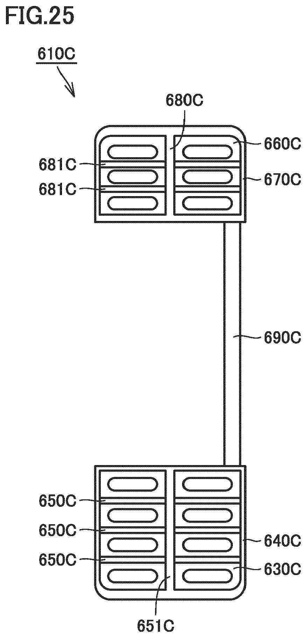

As shown in Fig. 25, a first spacer 610C according to the fourth embodiment includes a first base portion 630C, a first outer peripheral wall 640C, first inner walls 650C, a second inner wall 651C, a second base portion 660C, a second outer peripheral wall 670C, a third inner wall 680C, fourth inner walls 681C, and a coupling portion 690C. The plurality of first inner walls 650C are provided. The plurality of fourth inner walls 681C are provided.

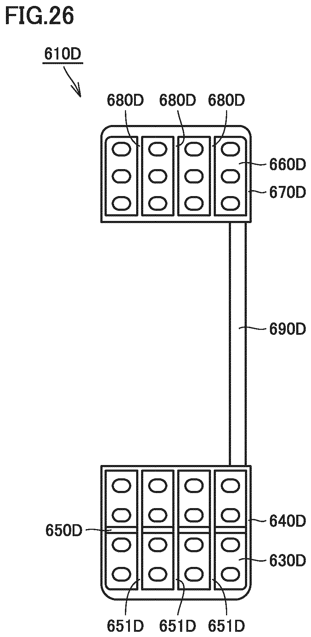

As shown in Fig. 26, a first spacer 610D according to the fifth embodiment includes a first base portion 630D, a first outer peripheral wall 640D, a first inner wall 650D, second inner walls 651D, a second base portion 660D, a second outer peripheral wall 670D, third inner walls 680D, and a coupling portion 690D. The plurality of second inner walls 651D are provided. The plurality of third inner walls 680D are provided.

In the secondary battery according to each of the fourth embodiment and fifth embodiment of the present technology, the strength required for the spacer can be readily secured by increasing the number of the inner walls, and the flow of the electrolyte solution can be secured by providing the through holes.

It should be noted that since the second spacer also has the same configuration as the first spacer, the second spacer also has the same function and effect as those of the first spacer.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A secondary battery (1) comprising:
an electrode assembly (200) including a first electrode (210) and a second electrode (240) having a polarity different from a polarity of the first electrode (210); and
a case (100) that accommodates the electrode assembly (200), wherein
the case (100) includes
a case main body (110) provided with a first opening (113) at one end portion of the case main body (110) and a second opening (114) at the other end portion of the case main body (110),
a first sealing plate (120) that seals the first opening (113), and
a second sealing plate (130) that seals the second opening (114),
the electrode assembly (200) includes
a first electrode tab (220, 270) disposed on the first sealing plate (120) side and electrically connected to the first electrode (210), and
a second electrode tab (250, 280) disposed on the second sealing plate (130) side and electrically connected to the second electrode (240),
a first spacer (610) is disposed between the first sealing plate (120) and the electrode assembly (200), and
the first spacer (610) includes
a first base portion (630) provided with a plurality of through holes (632),
a first outer peripheral wall (640) extending from an outer peripheral edge of a surface of the first base portion (630) on the first sealing plate (120) side toward the first sealing plate (120) and having a first portion (643) and a second portion (644) facing each other, and
a first inner wall (650) provided to connect the first portion (643) and the second portion (644) of the first outer peripheral wall (640).

2. The secondary battery (1) according to claim 1, wherein
the first outer peripheral wall (640) further has a third portion (645) and a fourth portion (646) provided to intersect the first portion (643) and the second portion (644) and facing each other,
the first spacer (610) further includes a second inner wall (651) provided to connect the third portion (645) and the fourth portion (646) of the first outer peripheral wall (640), and
the first inner wall (650) and the second inner wall (651) are provided to intersect each other.

3. The secondary battery (1) according to claim 2, wherein
the first base portion (630) has a plurality of partition portions (631) partitioned by the first outer peripheral wall (640), the first inner wall (650), and the second inner wall (651), and
the plurality of through holes (632) are provided at least in the plurality of partition portions (631) of the first base portion (630).

4. The secondary battery (1) according to any one of claims 1 to 3, wherein
the first spacer (610) includes
a second base portion (660) disposed to be separated from the first base portion (630), and
a second outer peripheral wall (670) extending from an outer peripheral edge of a surface of the second base portion (660) on the first sealing plate (120) side toward the first sealing plate (120), and
the first electrode tab (220, 270) is disposed between the first base portion (630) and the second base portion (660).

5. The secondary battery (1) according to claim 4, wherein
the second outer peripheral wall (670) has a fifth portion (673) and a sixth portion (674) facing each other, and
the first spacer (610) includes a third inner wall (680) provided to connect the fifth portion (673) and the sixth portion (674) of the second outer peripheral wall (670).

6. The secondary battery (1) according to claim 5, wherein the second base portion (660) is provided with a through hole (662).

7. The secondary battery (1) according to any one of claims 4 to 6, wherein the first spacer (610) includes a coupling portion (690) that connects the first base portion (630) and the second base portion (660).

8. The secondary battery (1) according to claim 7, wherein
the first electrode tab (220) has a curved portion (221), and
the coupling portion (690) has a curved surface (691) facing the curved portion (221).

9. The secondary battery (1) according to any one of claims 1 to 8, wherein a second spacer (620) is disposed between the second sealing plate (130) and the electrode assembly (200).

10. A method of manufacturing a secondary battery (1), wherein
the secondary battery (1) includes
an electrode assembly (200) including a first electrode (210) and a second electrode (240) having a polarity different from a polarity of the first electrode (210), and
a case (100) that accommodates the electrode assembly (200),
the case (100) includes
a case main body (110) provided with a first opening (113) at one end portion of the case main body (110) and a second opening (114) at the other end portion of the case main body (110),
a first sealing plate (120) that seals the first opening (113), and
a second sealing plate (130) that seals the second opening (114),
the electrode assembly (200) includes
a first electrode tab (220, 270) disposed on the first sealing plate (120) side and electrically connected to the first electrode (210), and
a second electrode tab (250, 280) disposed on the second sealing plate (130) side and electrically connected to the second electrode (240),
a first spacer (610) is disposed between the first sealing plate (120) and the electrode assembly (200), and
the first spacer (610) includes
a first base portion (630) provided with a plurality of through holes (632),
a first outer peripheral wall (640) extending from an outer peripheral edge of a surface of the first base portion (630) on the first sealing plate (120) side toward the first sealing plate (120) and having a first portion (643) and a second portion (644) facing each other, and
a first inner wall (650) provided to connect the first portion (643) and the second portion (644) of the first outer peripheral wall (640),
the method comprising:
producing the electrode assembly (200);
assembling the first spacer (610) to the electrode assembly (200); and
inserting the first spacer (610) and the electrode assembly (200) into the case main body (110).

11. The method of manufacturing the secondary battery (1) according to claim 10, comprising:
joining the first sealing plate (120) and the second sealing plate (130) to the case main body (110) after inserting the first spacer (610) and the electrode assembly (200) into the case main body (110); and
after joining the first sealing plate (120) and the second sealing plate (130) to the case main body (110), injecting an electrolyte solution into the case (100) via an injection hole (134) in a state in which the second sealing plate (130) is disposed on an upper side with respect to the first sealing plate (120) and the first spacer (610) is disposed on a lower side with respect to the electrode assembly (200) in a vertical direction, the injection hole (134) being provided in the second sealing plate (130).

12. The method of manufacturing the secondary battery (1) according to claim 10 or 11, wherein
the first outer peripheral wall (640) further has a third portion (645) and a fourth portion (646) provided to intersect the first portion (643) and the second portion (644) and facing each other,
the first spacer (610) further includes a second inner wall (651) provided to connect the third portion (645) and the fourth portion (646) of the first outer peripheral wall (640), and
the first inner wall (650) and the second inner wall (651) are provided to intersect each other.

13. The method of manufacturing the secondary battery (1) according to any one of claims 10 to 12, wherein
the first spacer (610) includes
a second base portion (660) disposed to be separated from the first base portion (630), and
a second outer peripheral wall (670) extending from an outer peripheral edge of a surface of the second base portion (660) on the first sealing plate (120) side toward the first sealing plate (120), and
the first electrode tab (220, 270) is disposed between the first base portion (630) and the second base portion (660).

14. The method of manufacturing the secondary battery (1) according to claim 13, wherein
the second outer peripheral wall (670) has a fifth portion (673) and a sixth portion (674) facing each other, and
the first spacer (610) includes a third inner wall (680) provided to connect the fifth portion (673) and the sixth portion (674) of the second outer peripheral wall (670).

15. The method of manufacturing the secondary battery (1) according to any one of claims 10 to 14, comprising covering the electrode assembly (200) and the first spacer (610) with an insulating sheet (700) after assembling the first spacer (610) to the electrode assembly (200).
